# EUROPEAN PATENT APPLICATION

(11) **EP 1 089 223 A2**
(43) Date of publication of application: **04.04.2001**
(21) Application number: 00119290.5
(22) Date of filing: 06.09.2000
(51) Int. Cl.: G06T 1/00

(54) **Information displaying method and system, and recording medium used therewith**

(30) Priority: 30.09.1999 JP 28085899
(71) Applicant: Konami Corporation, Minato-ku, Tokyo 105-6021 (JP); KCE Tokyo Inc., Tokyo 101-0051 (JP)
(72) Inventor: Saito, Mikio, KCE Tokyo Inc., Tokyo 101-0051 (JP)
(74) Representative: Manitz, Finsterwald & Partner

(57) **Abstract**

An information displaying method uses a virtual-reality-space-creating module (M22), an information recording module (M23), an access control module (M24), a retrieve module (M25). The virtual-reality-space-creating module (M22) creates the virtual reality space by using a virtual place name appearing in a predetermined scenario to specify the name of the virtual reality space. In the virtual reality space, events relating to the virtual place name and a game character appearing in the scenario are time-sequentially generated in combination with a move of the real society. The information recording module (M23) records the events generated in the virtual reality space and detailed information on the virtual place names and the game characters appearing in the virtual reality space, which cannot be obtained form the scenario, so that both type of information can be updated. The access control module (M24) determines whether each of unspecified users has a right to access the virtual reality space. In response to a request from the user permitted to perform accessing, the retrieve module (M25) retrieves the requested information from information storage.

## Description

### BACKGROUND OF THE INVENTION

### 1. Field of the Invention

The present invention relates to information displaying systems in which a computer having a logical space accessible by unspecified users is used to display the desired information to the users. The logical space is, for example, a logical space formed in a memory area of the computer and a Web site provided in a server terminal in the case of the Internet.

### 2. Description of the Related Art

The Internet culture is rapidly developing but a combination of the Internet and games and other types of entertaining elements is underdeveloped. Some Web sites provide areas for on-line games and areas for exchange of various types of information on consumer games. However, only a limited number of users skilled at using the Internet use these areas. Although a large amount of information is distributed, information which the users really seek tends to be hidden because there are no guidelines for treatment of the information distributed on the Internet.

A general type of consumer game distributed on the market is based on a predetermined story. When finishing playing the game, a game player immediately returns to the real world from the game world in which the game player plays the game. Nevertheless, in popular consumer games, it is common for a game scenario and each game character in which the game player is interested to strongly remain in the consciousness of the game player, even after the game player leaves the game world. If a contact environment for enabling the game player to experience the Internet culture can be constructed, the contact environment might contribute to mutual development of both the game industry and the network industry. This can also be applied to funs of publications and television dramas.

### SUMMARY OF THE INVENTION

Accordingly, it is an object of the present invention to provide an information displaying method that enables a user unaccustomed to communication methods to easily obtain desired information by computer.

It is another object of the present invention to provide an information displaying system adapted for implementing the information displaying method.

It is a further object of the present invention to provide a recording medium for use when a multi-purpose computer is used to implement the information displaying method.

To these ends, according to an aspect of the present invention, the foregoing objects are achieved through provision of an information displaying method for execution on a computer having a logical space accessible by unspecified users through a communications unit. The information displaying method includes the steps of: creating, in the logical space, a virtual reality space representing a virtual reality society relating to a predetermined scenario by using information displayed based on the scenario to specify the name of the virtual reality space; and displaying, for each of the users, information existing in a real space and information existing in the virtual reality space while seamlessly switching between both types of information, with the real space representing the real world and the constructed virtual reality space being linked together using the communications unit.

Preferably, the virtual reality society is displayed in a form simulating the real world.

The contents of the information existing in the virtual reality space may be changed in response to changes in the real world.

In the virtual reality space, an event occurring in the real world may be generated so as to correspond to a game element appearing in the scenario.

Part of the information existing in the virtual reality space may be displayed so as to be viewed by all the users, and the remaining part of the information may be enabled to be displayed in accordance with a request from the users who satisfy predetermined conditions.

The virtual reality space may include a multihierarchical page space formed using a guidance screen as a window of the page space. The remaining part of the information may be information existing at a predetermined hierarchy of the multihierarchical page space, and may be allowed to be displayed only for the users who acts in accordance with the scenario.

Information identical to permission information obtainable by the users in the advancing process of the scenario may be stored beforehand in the computer. When any one of the users requests display of the remaining part of the information, determination of whether the request includes the permission information may be performed, and when the result of the determination is affirmative, the remaining part of the information may be enabled to be displayed.

Information specified in the scenario may be the name of a game element appearing in the scenario.

According to another aspect of the present invention, the foregoing objects are achieved through provision of an information displaying method for execution on a computer having a logical space accessible by unspecified users through a communications unit. The information displaying method includes the steps of: creating, in the logical space, a virtual reality space representing a virtual reality society relating to play elements in a predetermined video game by using information displayed by the video game to specify the name of the virtual reality space; and displaying, for each of the users, information existing in a real space and information existing in the virtual reality space while seamlessly switching between both types of information, with the real space representing the real world and the constructed virtual reality space being linked together using the communications unit.

Preferably, the information existing in the virtual reality space is enabled to be displayed only to the users who perform accessing based on information obtained by playing the video game.

An Internet domain including the information displayed by the video game may be assigned to the virtual reality space, and only the users who use the Internet domain to perform accessing may be guided to the virtual reality space.

A unique electronic mail address may be set for each of at least one game character appearing in the video game, and information from the at least one game character may be displayed separately to each of the users who uses the electronic mail address to perform accessing.

According to a further aspect of the present invention, the foregoing objects are achieved through provision of an information displaying system including: a virtual-reality-space creating unit for creating, in a logical space accessible by unspecified users through a communications unit, a virtual reality space representing a virtual reality society relating to a predetermined scenario by using information displayed based on the scenario to specify the name of the virtual reality space; a linking unit for linking together a real space representing the real world and the constructed virtual reality space by the communications unit; an access control unit for determining whether each of the unspecified users has a right to access the virtual reality space; and a displaying unit for displaying, in response to a request from the user whose access right has been confirmed, information existing in the real space and information existing in the virtual reality space while seamlessly switching between both types of information.

Preferably, the virtual-reality-space creating unit controls the pieces of the information displayed based on the scenario to appear in the virtual reality space so as to have the same name and the representation form, and generates an event actually occurring in the real world or an event predicted to occur in the future so as to be correlated with the information displayed based on the scenario.

According to a still further aspect of the present invention, the foregoing objects are achieved through provision of a computer-readable recording medium containing a program code for controlling a computer having a logical space accessible by unspecified users through a communications unit so that the computer executes the steps of: (1) creating, in the logical space, a virtual reality space representing a virtual reality society relating to a predetermined scenario by using information displayed based on the scenario to specify the name of the virtual reality space; and (2) displaying, for each of the users, information existing in the real space and information existing in the virtual reality space while seamlessly switching between both types of information, with a real space representing the real world and the constructed virtual reality space being linked together using the communications unit.

According to yet another aspect of the present invention, the foregoing objects are achieved through provision of a computer-readable recording medium containing a program code for controlling a computer having a logical space accessible by unspecified users through a communications unit so that the computer executes the steps of: (1) creating in the logical space, a virtual reality space representing a virtual reality society relating to a predetermined scenario by using information displayed based on the scenario to specify the name of the virtual reality space; (2) linking together a real space representing the real world and the constructed virtual reality space by the communications unit; (3) determining whether each of the unspecified users has a right to access the virtual reality space; and (4) displaying, in response to a request from the user whose access right has been confirmed, information existing in the real space and information existing in the virtual reality space while seamlessly switching between both types of information.

According to the present invention, information can be displayed in a form corresponding to the contents of a scenario known to users. Therefore, even a user who is unaccustomed to collecting information by communication can readily obtain the desired information.

### BRIEF DESCRIPTION OF THE DRAWINGS

Fig. 1 is a block diagram showing an information displaying system 1 according to an embodiment of the present invention;
Fig. 2 is a block diagram showing functional modules provided in the information displaying system 1 shown in Fig. 1;
Fig. 3 is a flowchart showing an information displaying method for use in the information displaying system 1 shown in Fig. 1; and
Fig. 4 is an illustration of a specific Internet Web site.

### DESCRIPTION OF THE PREFERRED EMBODIMENTS

An embodiment of the present invention is described below in which the present invention is applied to an Internet-used information displaying system.

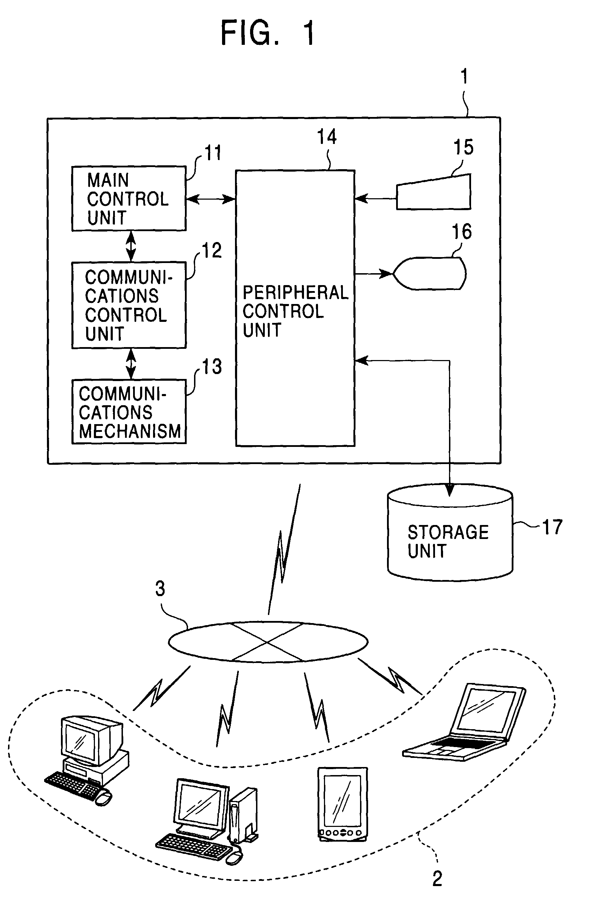

Fig. 1 shows an information displaying system 1 (according to this embodiment) that can be accessed by unspecified client terminals 2 via a communications line 3. The client terminals 2 are information terminals such as personal computers each having at least a unit for communicating with the Internet and a browser, portable information terminals, and game machines. The type of the communications line 3 does not matter if it can establish an environment enabling bidirectional communication between the information displaying system 1 and the client terminal 2.

The information displaying system 1 is a computer (or a computer system) that can create a Web site, and has at least the functions of a main control unit 11, a communications control unit 12, and a peripheral control unit 13 that are formed such that a predetermined program code is read and executed by the central processing unit of the computer under the control of its operating system.

The main control unit 11 forms various functional modules for displaying information, and controls the entirety of the system 1. The communications control unit 12 controls a communications mechanism for the communication between the information displaying system 1 and each client terminal 2 and for communications between the information displaying system 1 and an external system to which information on events occurring in the real world and information to be updated are input as required.

The peripheral control unit 14 controls a data input unit 15, a display unit 16, a storage unit 17, and other peripheral units (not shown). The data input unit 15 is a keyboard, a mouse, a pointing device, a sound input device, or the like. The display unit 16 is a monitoring cathode-ray tube or a liquid crystal display.

The storage unit 17 is an external storage device such as a hard disk or a magneto-optical disk. In the storage unit 17, the above-described program code for implementing the main control unit 11, the communications control unit 12, and the peripheral control unit 13, a known server program for controlling the information displaying system 1 to function as a Web site on the Internet, and data required for creating and operating a virtual reality space (described below), such as basic data for creating the virtual reality space, image data for enabling the virtual reality space to be visually recognized, event data representing events generated in the virtual reality space, a plurality of verification data for use in determination of whether each user is allowed to access the information displaying system 1, various types of information to be displayed, are stored so as to be updated as required.

The program code for implementing the above-described functions is normally stored in the storage unit 17, as described above. However, by recording the program in a portable recording medium such as a CD-ROM, which is separated from the information displaying system 1, and distributing the CD-ROM, the program code may be installed in the storage unit 17, as required, when the information displaying system 1 is formed. Also, the program code may be downloaded from a program server via a communications link so as to be stored in the storage unit 17.

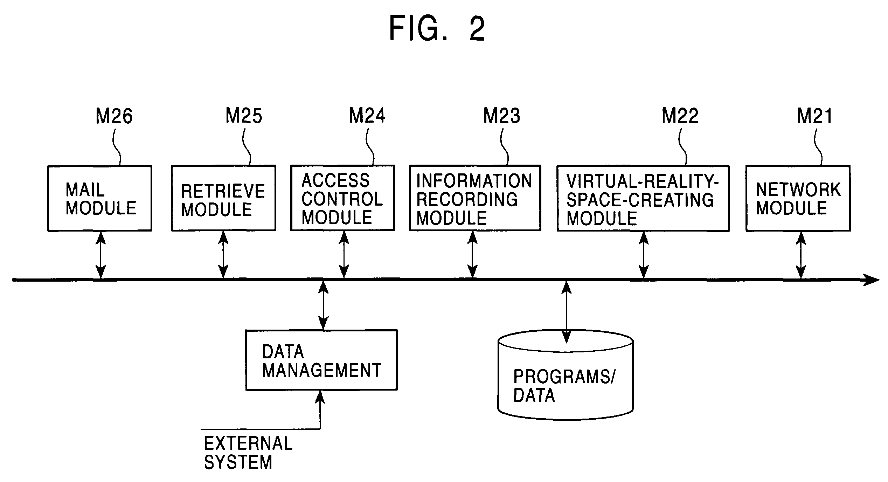

The functional modules formed by the main control unit 11 are as shown in Fig. 2. In this embodiment, a network module M21, a virtual-reality-space-creating module M22, an information recording module M23, an access control module M24, a retrieve module M25, and a mail module M26 are formed by the main control unit 11. By using the programs and the data stored in the storage unit 17 and data from an external (data management) system via the communications control unit 12 and the communications mechanism 13, each module creates an environment required for displaying information.

The network module M21 creates a network environment, including each client terminal 2 and the external system, and creates a hierarchically-represented virtual reality space using an Internet Web as a window, in a predetermined storage area of the storage unit 17 or a logical space of main memory. In the Internet Web, Internet index information for reaching the Internet Web, for example, an Internet domain, is set. By using the Internet domain, the user can easily access the information displaying system 1 as an Internet Web in a process similar to that of another existing Web site.

In this embodiment, the Internet domain is set to include information displayed based on a scenario for a known consumer game, a publication, or a scenario for a television drama or the like, for example, subjects introduced in a scenario or those appearing in a scenario. By way of example, in the case where name "aaaa" appears in a scenario, an Internet domain that includes this name, for example, an Internet domain specified by address "http://www.aaaa.or.jp/**" is set as an Internet domain. Those appearing in the scenario are assumed as virtual places, virtual sights, and virtual buildings (hereinafter referred to as "virtual place names") for a scenario, and specific elements appearing in a scenario (including those such as animals and plants). In the virtual reality space, the virtual places and the elements are allowed to appear having their real names in the real world. This enables a user who knows the contents of the scenario to be familiar with the information displaying system 1, and is expected to enter the desired virtual reality space.

The access control module M24 compares permission information sent from the user via the client terminal 2 with verification data for a space to be accessed, thereby determining whether the accessing of the information displaying system 1 by the user is permitted. When the result of the determination is affirmative, the user is allowed to access the space. When the result of the determination is negative, the user is not allowed to access the space. In the verification data, a plurality of ranks are set, which are described later.

If the user allowed to access the space has accessed and requested display of information, the retrieve module M25 retrieves the information from the storage unit 17, controls the Web on the display unit 16 to display the retrieved information, and controls the client terminal 2 to display the retrieved information on the browser.

In the mail module M26, an electronic mail address corresponding to at least one element appearing in the virtual reality space is set and managed. The mail module M26 manages transmission and reception of electronic mail from the user to a specific element or from a specific element to the user. The electronic mail address of each element may be allowed to be viewed in the form of a list by any person, as required, or may be allowed to be viewed by only a user who stratifies predetermined conditions. When the user transmits an electronic mail message to a certain element, the electronic mail address of the element is used and the real name of the element is used. As a response from the element, a predetermined message made in a tone in the scenario is normally used.

An electronic mail address including a domain name identical to each element, provided to a user who desires the provision, may be managed.

Next, an information displaying method using the above-described information displaying system 1 is described below. A case is described in which the information displaying method does not advertise for users as a standard type provider does and in which information is displayed for each user who formally obtains a video game as an example of scenario, or each user who is allowed to know various types of permission information (described later) by actually playing the video game.

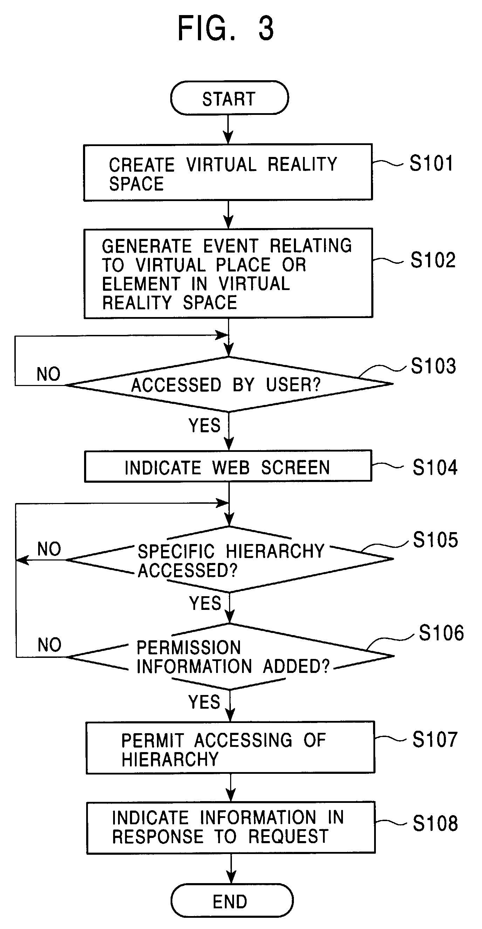

Fig. 3 shows the process of the information displaying method.

A hierarchically-represented virtual reality space using an Internet Web as a window is created by the virtual-reality-space-creating module M22 (step S101).

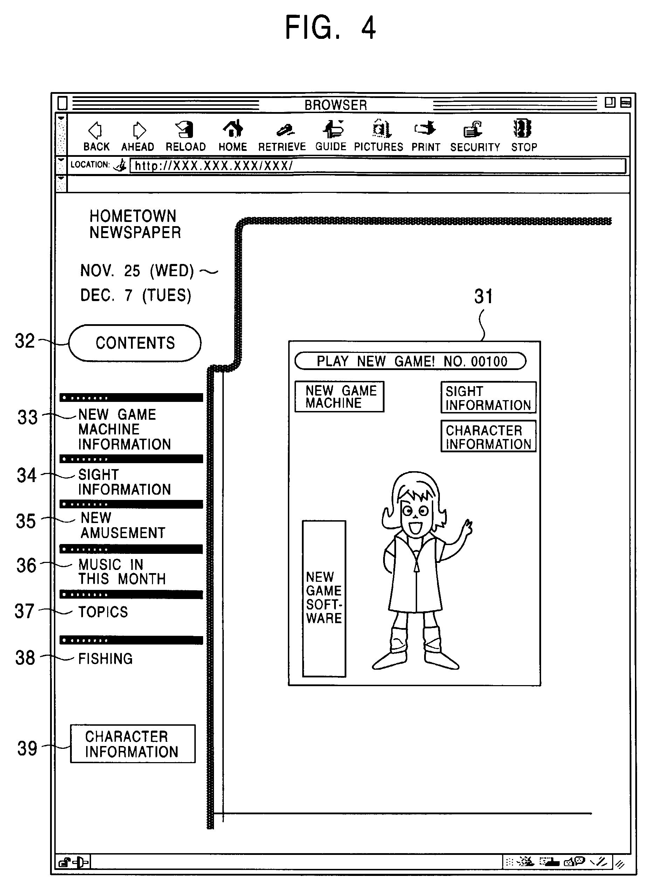

The virtual reality space is a home-page space having a form of a magazine or a hometown newspaper which introduces game elements appearing in the video game, for example, virtual place names (city names) and specific place names such as township names and sights (generically referred to as "virtual place names"), as shown in Fig. 4. An Internet domain address including one of the virtual place names is assigned to the virtual reality space.

As shown in Fig. 4, on the home page, an information displaying area 31 at the top and link destinations 32 to 38 for links to lower level space (page space) are set. By sequentially proceeding to each of the link destinations 32 to 39, a page space for displaying information allowed to be viewed by all users can be accessed, and a page space for displaying information allowed to be viewed only by specific users can be accessed.

Information existing in a real space representing the real society, or detailed information that cannot be obtained from the video game, for example, information on introduction of the latest game machine and its video game, information relating to sights appearing in the video game, detailed profiles of game elements, and information of guidance by each game element, can be retrieved from the external system linked by the storage unit 17 or the peripheral control unit 14 when being required, and can be displayed in each page space. By pasting a link through the communications control unit 12 and the communications mechanism 13 to a real space (e.g., another existing Web site) representing the real society, information existing in the link destination can be seamlessly displayed.

As link destinations in each page space, uniform resource locators (URLs) to other existing Web sites can be set, and the URL of the home page in this embodiment can be set in other Web sites. This can establish relationships with other existing Web sites.

For establishing relationships with other existing Web sites, not only the URL of each Web site is directly described on the home page shown in Fig. 4, but also a relationship with each existing Web site is established while a relationship with a virtual reality space is being simultaneously established. By way of example, when a relationship with a Web site for purchase of books, a link to a virtual bookstore set in a virtual place name in a virtual reality space may be set on a home page, and in the page space of the virtual bookstore, a link to an existing book-purchase Web site may be set. This technique is not limited to books but can be applied to compact disks, game software, etc.

The virtual-reality-space-creating module M22 time-sequentially generates, in each page space, each virtual place name and/or each event relating to a game character, which are examples of game elements, so as to be correlated with changes in the real world (step S102).

By way of example, when a school-life story of leading game character A is developed on a video game, features of the home of the character A, human relations relating to the private life of the character A, various events such as travel, etc., are expressed by images, text, or a combination of the images and the text in a plurality of page spaces. Audio data may be output with the images. At this time, the names of persons, place names, etc., which actually exist in the real world, are set to also appear in each page space as the virtual names virtually exist in the real world, and events actually occurring in the real world or events (in sports, show business, fashions, politics, incidents, accidents, etc.) predicted to occur are set to appear having their real names, as surrounding events arising around the character A. This can be implemented by using, in combination, data (from the external system) representing changes in the real world which are managed by the information recording module M23, in addition to the event data stored in the storage unit 17 beforehand.

When the information displaying system 1 is accessed by the user ("Yes" in step S103), the Web screen as the initial page space is displayed for the user, and information appearing on the Web screen, for example, introductory information of an advertisement for video games and of how to use the Information displaying system 1, information to be widely provided as a hometown newspaper or magazine to general users, and information relating to general events occurring in the real world, are set so as to be accessed without limitation (step S104).

For the accessing of a link destination (page space) having a specific hierarchy, which is positioned in the lower part of the Web screen, predetermined limitation is set. Specifically, when a page space having a predetermined hierarchy is accessed ("Yes" In step S105), the access control module M24 determines whether permission information is added which is identical to the verification data stored in the storage unit 17 (step S106). Only when the permission information is added ("Yes" in step S106), the access control module M24 permits the accessing of the page space having the hierarchy (step S107).

The permission information (= verification data) is, for example, a product number representing a proper video-game holder and a password that can be obtained in the process of playing the video game. The permission information is set to have a rank in accordance with the level of information that can be displayed. For example, for detailed information (e.g., information that cannot be obtained from a video game) on virtual place names and game characters appearing in a video game, the permission information is set to have rank 1 (e.g., a product number or the like). For private information of a specific game character and a special event occurring in the private life of the game character, the permission information is set to have rank 2 (e.g., a password or the like that only a user who actually plays the video game can know). When the user accesses the page space having the hierarchy, with the permission information being added to the access information, determination of whether conditions for each user are satisfied. In other words, by forming, as an extension of the video game, a state having a Web site as in the information displaying system 1, a fusion of a game space, a virtual reality space, and a real society is achieved.

The permission information can be set to have more detailed ranks.

As for the page space permitted to be accessed by the user, a request from the user controls the retrieve module M25 to retrieve the corresponding information from the storage unit 17, and the retrieved information is displayed in a form enabling visual recognition on the user's browser (step S108).

By operating the information displaying system 1 as described above, a real space (information stored in the storage unit 17 while being updated as required, and another Web site) representing the real world and a virtual reality space (page space) are linked together, whereby information existing in the real world and information existing in the virtual reality space can be displayed while being seamlessly switched.

As described above, in the mail module M26, a plurality of game characters are provided with electronic mail addresses. Thus, in response to an electronic mail message from the user to a specific game character, information corresponding to the game character can be displayed by sending a response electronic mail message. At this time, the response electronic mail message is automatically created so as to have the real name of the game character. The response electronic mail message may be created having a tone used in the video game.

In addition, by providing the user with an electronic mail address using a domain identical to that of each game character if the user desires the provision, the electronic mail address may be managed.

In a form of the information displaying system 1, in a page space having a specific hierarchy, an independent event in which a plurality of user participate can be held, and information as a result of the event can be displayed. The types of the event include, for example, a popularity vote for game characters, and one in which the users play the game with a specific game character and ranking of points as a result of the game is determined. High-ranking users may be provided with predetermined incentive.

The information displaying system 1 may be a type allowing participation of a plurality of users in which a bulletin board of a topic in accordance with a user's request is created for each page space so that the users mutually use the bulletin board to display information based on the common topic. In addition, the information displaying system 1 can be operated allowing a special user to operate a page screen having a specific hierarchy under the control of the information displaying system 1. The special user means a user whose performance is appreciated based on actions and statements in the virtual reality space in the past.

In the above-described information displaying system 1, a video game is used as an example of the scenario, and virtual place names and game character names are used. However, concerning a scenario for a television drama, an environment in which the use of a similar process displays information to users can be created.

## Claims

1. An information displaying method for execution on a computer (1) having a logical space accessible by unspecified users through communications means (3), said information displaying method comprising the steps of:
creating, in said logical space, a virtual reality space representing a virtual reality society relating to a predetermined scenario by using information displayed based on the scenario to specify the name of said virtual reality space; and
displaying, for each of the users, information existing in a real space and information existing in said virtual reality space while seamlessly switching between both types of information, with the real space representing the real world and the constructed virtual reality space being linked together using said communications means (3).

2. An information displaying method according to Claim 1, wherein said virtual reality society is displayed in a form simulating the real world.

3. An information displaying method according to Claim 1, wherein the contents of said information existing in said virtual reality space are changed in response to changes in the real world.

4. An information displaying method according to Claim 1, wherein, in said virtual reality space, an event occurring in the real world is generated so as to correspond to a game element appearing in said scenario.

5. An information displaying method according to Claim 1, wherein part of said information existing in said virtual reality space is displayed so as to be viewed by all the users, and the remaining part of the information is enabled to be displayed in accordance with a request from the users who satisfy predetermined conditions.

6. An information displaying method according to Claim 5, wherein:
said virtual reality space comprises a multihierarchical page space formed using a guidance screen as a window of the page space; and
the remaining part of the information is information existing at a predetermined hierarchy of said multihierarchical page space, and is allowed to be displayed only for the users who acts in accordance with said scenario.

7. An information displaying method according to Claim 5, wherein:
information identical to permission information obtainable by the users in the advancing process of said scenario is stored beforehand in said computer (1);
when any one of the users requests display of the remaining part of the information, determination of whether the request includes said permission information is performed; and
when the result of the determination is affirmative, the remaining part of the information is enabled to be displayed.

8. An information displaying method according to Claim 1, wherein information specified in said scenario is the name of a game element appearing in said scenario.

9. An information displaying method for execution on a computer (1) having a logical space accessible by unspecified users through communications means (3), said information displaying method comprising the steps of:
creating, in said logical space, a virtual reality space representing a virtual reality society relating to play elements in a predetermined video game by using information displayed by the video game to specify the name of said virtual reality space; and
displaying, for each of the users, information existing in a real space and information existing in said virtual reality space while seamlessly switching between both types of information, with the real space representing the real world and the constructed virtual reality space being linked together using said communications means (3).

10. An information displaying method according to Claim 9, wherein said information existing in said virtual reality space is enabled to be displayed only to the users who perform accessing based on information obtained by playing said video game.

11. An information displaying method according to Claim 9, wherein an Internet domain including said information displayed by said video game is assigned to said virtual reality space, and only the users who use said Internet domain to perform accessing is guided to said virtual reality space.

12. An information displaying method according to Claim 9, wherein a unique electronic mail address is set for each of at least one game character appearing in said video game, and information from said at least one game character is displayed separately to each of the users who uses the electronic mail address to perform accessing.

13. An information displaying system comprising:
virtual-reality-space creating means for creating, in a logical space accessible by unspecified users through communications means (3), a virtual reality space representing a virtual reality society relating to a predetermined scenario by using information displayed based on the scenario to specify the name of said virtual reality space;
linking means for linking together a real space representing the real world and the constructed virtual reality space by said communications means (3);
access control means for determining whether each of said unspecified users has a right to access said virtual reality space; and
displaying means for displaying, in response to a request from the user whose access right has been confirmed, information existing in said real space and information existing in said virtual reality space while seamlessly switching between both types of information.

14. An information displaying system according to Claim 13, wherein said virtual-reality-space creating means controls the pieces of said information displayed based on the scenario to appear in said virtual reality space so as to have the same name and the representation form, and generates an event actually occurring in the real world or an event predicted to occur in the future so as to be correlated with said information displayed based on the scenario.

15. A computer-readable recording medium (17) containing a program code for controlling a computer (1) having a logical space accessible by unspecified users through communications means (3) so that said computer (1) executes the steps of:
creating, in said logical space, a virtual reality space representing a virtual reality society relating to a predetermined scenario by using information displayed based on the scenario to specify the name of said virtual reality space; and
displaying, for each of the users, information existing in said real space and information existing in said virtual reality space while seamlessly switching between both types of information, with a real space representing the real world and the constructed virtual reality space being linked together using said communications means (3).

16. A computer-readable recording medium (17) containing a program code for controlling a computer (1) having a logical space accessible by unspecified users through communications means (3) so that said computer (1) executes the steps of:
creating, in said logical space, a virtual reality space representing a virtual reality society relating to a predetermined scenario by using information displayed based on the scenario to specify the name of said virtual reality space;
linking together a real space representing the real world and the constructed virtual reality space by said communications means (3);
determining whether each of said unspecified users has a right to access said virtual reality space; and
displaying, in response to a request from the user whose access right has been confirmed, information existing in said real space and Information existing in said virtual reality space while seamlessly switching between both types of information.
